# EUROPÄISCHE PATENTANMELDUNG

(11) **EP 3 109 188 A1**
(43) Veröffentlichungstag der Anmeldung: **28.12.2016**
(21) Anmeldenummer: 16173213.6
(22) Anmeldetag: 07.06.2016
(51) Int. Cl.: B65G 39/073, B65G 15/12

(54) **ROLLE FÜR EINE FÖRDERANLAGE SOWIE FÖRDERANLAGE MIT MINDESTENS EINER DERARTIGEN ROLLE**

(30) Priorität: 24.06.2015 DE 102015211755
(71) Anmelder: Max Aicher GmbH & Co. KG, 83395 Freilassing (DE)
(72) Erfinder: Uebel, Andreas, 92245 Kümmersbruck (DE)
(74) Vertreter: Rau, Schneck & Hübner Patentanwälte Rechtsanwälte PartGmbB

(57) **Zusammenfassung**

Eine Rolle (3) für eine Förderanlage umfasst einen zylindrischen Schaft (13), der um eine Drehachse (6) drehbar ist, und mindestens einen Abtropfkanal (18, 19) zum gezielten Führen von Flüssigkeiten und/oder Feststoffen, die auf die Rolle (3) einwirken.

## Beschreibung

Die vorliegende Patentanmeldung nimmt die Priorität der deutschen Patentanmeldung DE 10 2015 211 755.3 in Anspruch, deren Inhalt durch Bezugnahme hierin aufgenommen wird.

Die Erfindung betrifft eine Rolle für eine Förderanlage sowie eine Förderanlage mit mindestens einer derartigen Rolle.

Förderanlagen, beispielsweise in Form angetriebener Förderbänder, sind bekannt. Auf die rotierenden Rollen auftreffende Flüssigkeiten und/oder Feststoffe werden unkontrolliert verteilt. Die Flüssigkeiten und/oder die Feststoffe führen zu einer Verschmutzung und gegebenenfalls Beschädigung der Förderanlage.

Der Erfindung liegt die Aufgabe zugrunde, das Risiko von Verschmutzungen und/oder Beschädigungen einer Förderanlage zu reduzieren.

Die Aufgabe wird durch die Merkmale der Ansprüche 1 und 11 gelöst. Der Kern der Erfindung besteht darin, dass eine Rolle für eine Förderanlage mindestens einen Abtropfkanal aufweist. Die Rolle weist einen zylindrischen Schaft auf, der um die Drehachse drehbar ist. Der Abtropfkanal dient zum gezielten Führen von Flüssigkeiten und/oder Feststoffen, die auf die Rolle einwirken. Insbesondere während des Betriebs der Förderanlage, also während sich die Rollen um eine Drehachse drehen, werden Flüssigkeiten und/oder Feststoff gezielt entlang der Rolle geführt. Ein unbeabsichtigtes Spritzen von Flüssigkeiten und/oder Feststoffen auf die Förderanlage und insbesondere auf ein Förderband und/oder darauf transportierte Waren ist im Wesentlichen ausgeschlossen. Flüssigkeiten und/oder Feststoffe können gezielt entlang des Abtropfkanals seitlich abgeführt werden und insbesondere infolge der Schwerkraft nach unten abtropfen. Die Förderanlage bleibt unverschmutzt und unbeschädigt. Dadurch, dass wenig und insbesondere keine Flüssigkeit im Bereich der Förderanlage vorhanden ist, ist die Gefahr eines Einfrierens der Förderanlage bei Minustemperaturen reduziert. Die Gefahr witteningsbedingter Ausfälle ist reduziert. Aufgrund reduzierter Feuchtigkeit und Schmutz ist die Lebensdauer der Förderanlage, insbesondere des Förderbandes, erhöht. Wartungsintervalle sind verlängert. Die Rollen und die damit ausgestatte Förderanlage sind ökologisch und ökonomisch sinnvoll. Der Verschleiß der verwendeten Teile ist reduziert.

Eine Rolle, bei der der mindestens eine Abtropfkanal an einer äußeren Zylindermantelfläche der Rolle integriert ausgeführt ist, ermöglicht eine kompakte Ausführung der Rolle. Die Teileanzahl ist reduziert. Die Herstellung der Rolle ist vereinfacht. Der Abtropfkanal ist insbesondere als nutförmige Vertiefung ausgeführt. Die nutförmige Vertiefung kann beispielsweise ein U-förmiges oder ein halbkreisförmiges Profil aufweisen. Die Nut kann auch rechteckförmig oder V-förmig ausgeführt sein.

Eine Rolle, bei der Abtropfkanal schraubenlinienförmig bezüglich der Drehachse ausgeführt ist, gewährleistet, dass Flüssigkeiten und/oder Feststoffe entlang des Abtropfkanals gezielt entlang einer Abführrichtung abgeführt werden. Die Abführrichtung ist entlang der Drehachse orientiert. Es ist beispielsweise möglich, dass die Rolle beidseitig oder einseitig an einem Förderband übersteht und der Abtropfkanal derart orientiert ist, dass Flüssigkeiten und/oder Feststoffe nach außen, also von dem Förderband weg gefördert werden. Infolge der Drehung der Rolle und der schraubenlinienförmigen Ausführung des Abtropfkanals ergibt sich die axiale Förderung der Flüssigkeiten und/oder der Feststoffe.

Eine Rolle, bei der der mindestens eine schraubenlinienförmige Abtropfkanal eine Ganghöhe aufweist, die kleiner ist als der Außendurchmesser des Schafts, ermöglicht eine zuverlässige Axialförderung der Flüssigkeiten und/oder Feststoffe. Insbesondere beträgt die Ganghöhe höchstens 50 % des Außendurchmessers des Schafts, insbesondere höchstens 40 % des Außendurchmessers des Schafts, insbesondere höchstens 30 % des Außendurchmessers des Schafts und insbesondere höchstens 25 % des Außendurchmessers des Schafts.

Eine Rolle, bei der der mindestens eine schraubenlinienförmige Abtropfkanal mindestens eine vollständige Windung um die Drehachse aufweist, gewährleistet eine ausreichende Axialverdrängung von Flüssigkeiten und/oder Feststoffen entlang der Drehachse. Eine vollständige Windung um die Drehachse bedeutet, dass sich der Abtropfkanal an dem Schaft entlang eines Öffnungswinkels von 360° um die Drehachse erstreckt. Insbesondere erstreckt sich der Abtropfkanal mindestens entlang zwei vollständiger Windungen, insbesondere mindestens entlang fünf vollständiger Umdrehungen und insbesondere entlang mindestens zehn vollständiger Umdrehungen um die Drehachse.

Eine Rolle mit stirnseitig angeordneten Lagerungseinheiten gewährleistet eine gelagerte Anordnung der drehbaren Rolle an einer Halterung. Es ist gewährleistet, dass die Rolle eine für die Förderung erforderliche Drehbewegung robust ausführen kann. Insbesondere sind die Lagerpunkte fest im Raum aber drehbar um die Drehachse gelagert. Die Lagerungseinheiten sind beispielsweise als Kugellager und/oder Rollenlager ausgeführt. Derartige Lagerungseinheiten sind kostengünstig verfügbar und garantieren einen stabilen Lagerungszustand.

Eine Rolle mit einem Ableitabschnitt zum Ableiten der Flüssigkeiten und/oder der Feststoffe von der Rolle garantiert ein gezieltes Ableiten der Flüssigkeiten und/oder der Feststoffe insbesondere auch dann, wenn ein schwerkraftbedingtes, selbsttätiges Ableiten der Flüssigkeiten und/oder Feststoffe infolge der Schwerkraft nicht ausreicht. Insbesondere dann, wenn das Aufkommen von Flüssigkeiten und/oder Feststoffen groß ist, sodass ein selbsttätiges Abtropfen nur eingeschränkt möglich ist, gewährleistet der Ableitabschnitt eine störungsfreie Betätigung der Förderanlage.

Eine Rolle mit zwei Abtropfkanälen ermöglicht eine effektive Ableitung von Flüssigkeiten und/oder Feststoffen. Die Abtropfkanäle erstrecken sich insbesondere jeweils von einer Stirnseite der Rolle aus. Mittels jeweils einem Abtropfkanal kann eine gezielte Ableitung nach außen bzw. nach innen erfolgen. Es ist auch denkbar, mehr als zwei Abtropfkanäle, insbesondere entlang der Drehachse, an der Rolle vorzusehen. Eine Mehrzahl von Abtropfkanälen kann insbesondere bei einer besonders langen Ausführung der Rolle vorteilhaft sein. Eine lange Ausführung einer Rolle ist dann gegeben, wenn das Verhältnis von Länge zu Durchmesser der Rolle größer ist als 5, insbesondere > 10, insbesondere > 20 und insbesondere ≤ 100.

Bei einer Rolle, bei der der Schaft aus Stahlwerkstoff hergestellt ist, ist die Lebensdauer erhöht. Stahl ist ein robuster Werkstoff. Insbesondere sind Stahllegierungen St 52, St 37, nicht rostender Stahl, oder Edelstahl denkbar. Es ist auch denkbar, die Rolle aus Kunststoff herzustellen. Die Dauerfestigkeit des Materials und damit der Rolle sind erhöht. Der Reparaturaufwand ist reduziert. Reparaturzyklen sind verlängert. Stillstandzeiten der Förderanlage sind reduziert. Die Wirtschaftlichkeit der Anlage ist dadurch insgesamt erhöht.

Bei einer Rolle, bei der der Schaft rohrförmig ausgeführt ist, ist der Materialeinsatz optimiert. Eine derartige Rolle ist leichtbauend ausgeführt. Die bewegten Massen sind reduziert. Der Energieaufwand für den Antrieb einer derartigen Anlage ist reduziert.

Eine Förderanlage, die mindestens eine erfindungsgemäße Rolle aufweist, die zum Antrieb eines Förderbandes dient, weist im Wesentlichen die Vorteile der Rolle auf, worauf hiermit verwiesen wird.

Eine Förderanlage, bei der das Förderband entlang der Förderrichtung geteilt ausgeführt ist, ermöglicht einen zwischen den Förderbandabschnitten orientierten Trennspalt. Die Förderrichtung ist senkrecht zu den Drehachsen der Rollen orientiert. Die, insbesondere zwei, insbesondere identisch ausgeführten, Förderbandabschnitte laufen entlang der Rollen parallel.

Eine Förderanlage mit mehreren Rollen, deren Drehachsen parallel zueinander angeordnet sind, ermöglicht einen stabilen und zuverlässigen Antrieb des Förderbandes mittels der Rollen.

Weitere vorteilhafte Ausgestaltungen, zusätzliche Merkmale und Einzelheiten der Erfindung ergeben sich aus der nachfolgenden Beschreibung eines Ausfühningsbeispiels anhand der Zeichnung. Es zeigen:
- Fig. 1: eine perspektivische Darstellung eines Teils einer Förderanlage,
- Fig. 2: einen vergrößerten Detailausschnitt gemäß Detail II in Fig. 1,

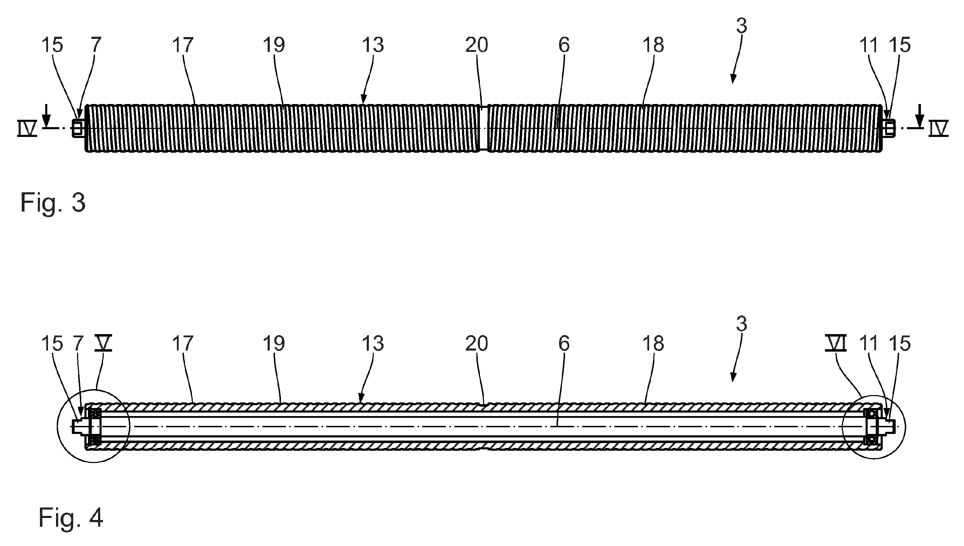

- Fig. 3: eine Seitenansicht einer erfindungsgemäßen Rolle,
- Fig. 4: einen Längsschnitt gemäß Schnittlinie IV-IV in Fig. 3,
- Fig. 5: eine vergrößerte Detailansicht gemäß Detail V in Fig. 4 und
- Fig. 6: eine vergrößerte Detailansicht gemäß Detail VI in Fig. 4.

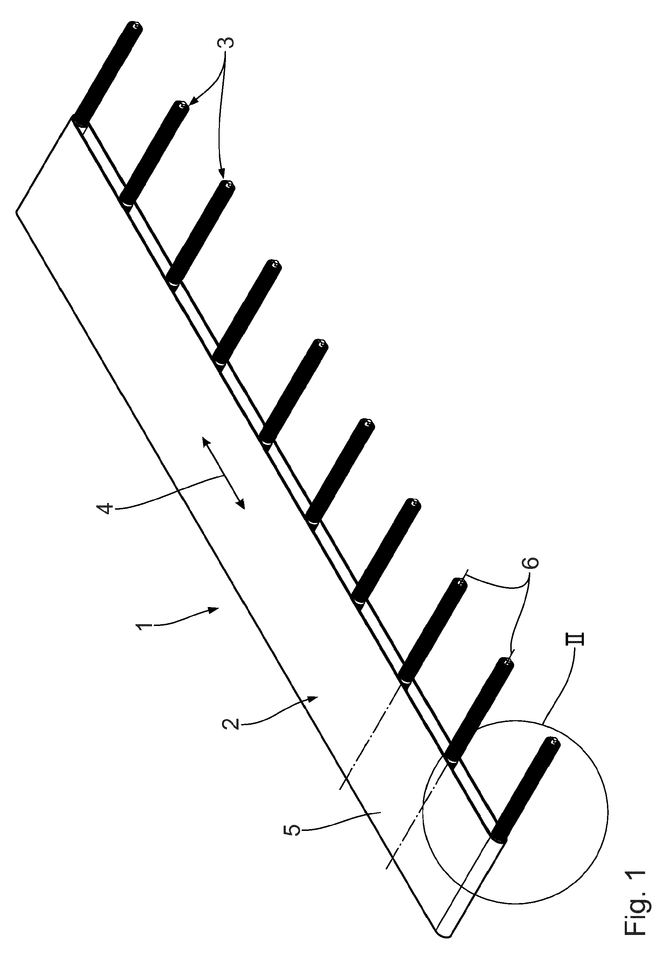

Eine in Fig. 1 nur teilweise dargestellte Förderanlage 1 dient zum Fördern von Feststoffen und/oder Flüssigkeiten. Die Förderanlage 1 umfasst ein Förderband 2, das mittels mehrerer, gemäß dem gezeigten Ausführungsbeispiel zehn, Rollen 3 entlang einer Förderrichtung 4 bewegt wird. In Abhängigkeit einer Drehrichtung der Rollen 3 resultiert die Förderrichtung 4. Entsprechend ist die Förderrichtung 4 in Fig. 1 als Doppelpfeil angedeutet.

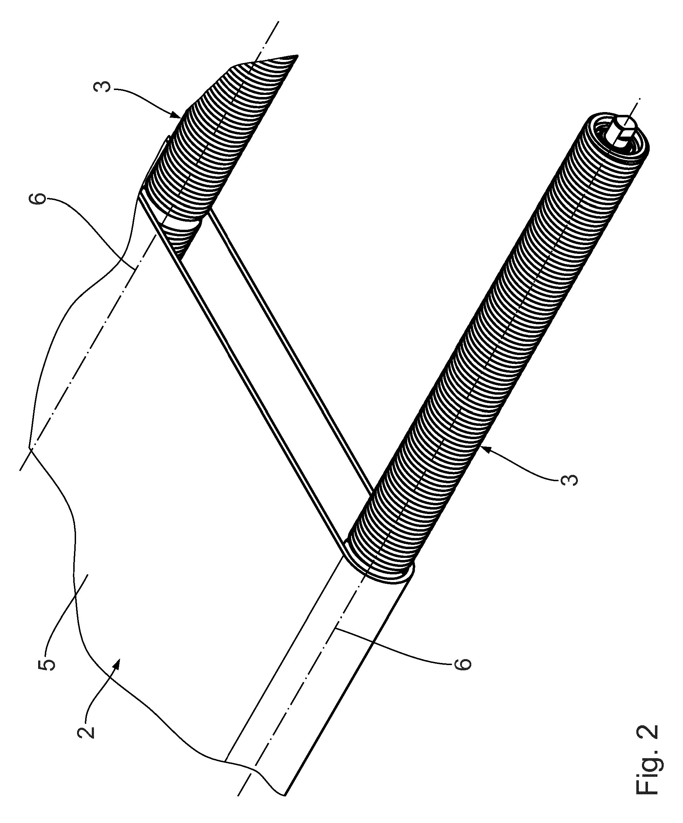

Das Förderband 2 umfasst zwei identische Förderbandabschnitte 5, wobei in Fig. 1 und 2 lediglich ein, an den Rollen 3 jeweils links angeordneter Förderbandabschnitt 5 dargestellt ist. Die Förderbandabschnitte 5 sind separat und voneinander getrennt ausgeführt. Dadurch, dass der zweite Förderbandabschnitt nicht dargestellt ist, sind die Rollen 3 etwa hälftig sichtbar. Die jeweils andere Hälfte der Rollen 3 ist durch den Förderbandabschnitt 5 verdeckt. Der Förderbandabschnitt 5 ist als Endlosband um die Rollen 3 umlaufend ausgeführt. Nicht dargestellt in Fig. 1 ist eine Haltevorrichtung, beispielsweise in Form eines Rahmengestells, an dem die Rollen 3 aufgenommen und gehalten sind. Die Rollen 3 sind jeweils um ihre Drehachse 6 drehbar. Die Drehachsen 6 der Rollen 3 sind parallel zueinander orientiert. Die Förderrichtung 4 ist senkrecht zu den Drehachsen 6 orientiert.

Gemäß dem gezeigten Ausfühningsbeispiel sind die Drehachsen 6 der Rollen 3 in einer Ebene angeordnet. Es ist denkbar, durch geeignete Anordnung der Rollen 3 einen nicht ebenen, räumlichen Verlauf des Förderbandes 2 zu erzeugen.

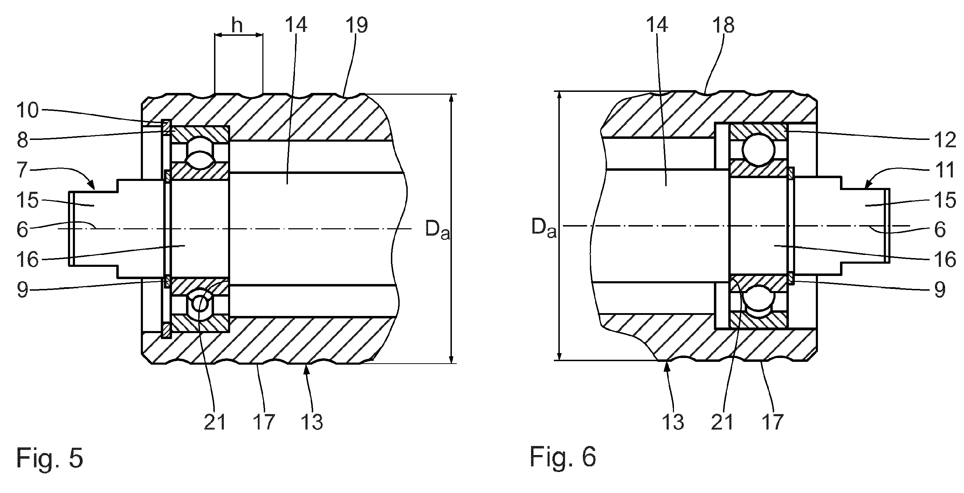

Zur Befestigung der Rollen 3 an einer Halterung sind jeweils stirnseitig Lagerungseinheiten 7, 11 in die Rollen 3 integriert. Die Lagerungseinheiten 7, 11 sind im Detail in Fig. 5 und 6 dargestellt. Eine erste, in Fig. 5 dargestellte Lagerungseinheit 7 umfasst ein Rollenlager 8, das entlang der Drehachse 6 mittels zweier Haltescheiben 9, 10 gehalten ist. Die erste Lageningseinheit 7 dient insbesondere zur Aufnahme von Radialkräften bezogen auf die Drehachse 6.

Eine zweite Lagerungseinheit 11 dient zur Aufnahme von Radialkräften und zur Aufnahme von Axialkräften bezogen auf die Drehachse 6. Die zweite Lagerungseinheit 11 ist als Kugellager 12 ausgeführt und mittels einer Haltescheibe 9 axial bezogen auf die Drehachse 6 fixiert.

Die Rolle 3 weist einen zylindrischen Schaft 13 auf, wobei die Drehachse 6 der Zylinderachse entspricht. Der Schaft 13 ist um die Drehachse 6 drehbar. Die Drehachse 6 ist konzentrisch zur Drehmitte des Schafts 13 angeordnet. Konzentrisch zur Drehachse 6 eine Haltestange 14 ausgeführt. Die Haltestange 14 ist im Wesentlichen als Vollzylinder ausgeführt. Die Haltestange 14 weist einteilig angeformte, jeweils an den Stirnseiten des Schafts 13 entlang der Drehachse 6 überstehende Halteabschnitte 15 auf. Mit den Halteabschnitten 15 ist die Haltestange 14 der nicht dargestellten Haltevorrichtung befestigt. Die Halteabschnitte 15 weisen einen senkrecht zur Drehachse 6 orientierten Querschnitt auf, der unrund ausgeführt ist.

Dadurch ist eine verdrehsichere Anordnung des Halteabschnitts 15 in einer dafür vorgesehenen Ausnehmung der Haltevorrichtung begünstigt.

Die Lagerungseinheiten 7, 11 gewährleisten in eine drehbare Anordnung des Schafts 13 um die Drehachse 6 gegenüber der nicht drehbaren Haltestange 14. Die Lagerungseinheiten 7, 11 sind jeweils an einem Lageningsabschnitt 16 der Haltestange 14 angeordnet. Der Lagerungsabschnitt 16 ist in axialer Richtung durch eine Nut, in die die Haltescheibe 9 eingelegt ist, und eine dazu in Richtung der Drehachse 6 beabstandet angeordnete Anlageschulter 21 begrenzt. Dadurch ist die jeweilige Lagerungseinheit 7 bzw. 11 an dem Lagerungsabschnitt 16 axial gesichert angeordnet. Die Haltescheibe 10 ermöglicht zusätzlich eine axiale Sicherung der ersten Lagerungseinheit 7, die zur Aufnahme von Axialkräften nicht geeignet ist. Eine derartige Sicherung des Außenrings der zweiten Lagerungseinheit 11 ist entbehrlich, da die zweite Lagerungseinheit 11 zur Aufnahme von Axialkräften ausgeführt ist.

Der Schaft 13 und die Haltestange 14 sind jeweils aus Stahlwerkstoff und insbesondere aus identischem Stahlwerkstoff hergestellt.

An der äußeren Oberfläche des Schafts 13, die als äußere Zylindermantelfläche 17 ausgeführt ist, sind ein erster Abtropfkanal 18 und ein zweiter Abtropfkanal 19 vorgesehen. Die Abtropfkanäle 18, 19 sind im Wesentlichen identisch ausgeführt. Die Abtropfkanäle 18, 19 sind in die äußere Zylindermantelfläche 17 integriert. Die Abtropfkanäle 18, 19 sind jeweils als nutförmige Vertiefung ausgeführt. Die Abtropfkanäle 18, 19 sind als schraubenlinienförmige Kanäle an der äußeren Zylindermantelfläche 17 bezüglich der Drehachse 6 ausgeführt. Die schraubenlinienförmigen Abtropfkanäle 18, 19 weisen jeweils eine Ganghöhe h auf, die kleiner ist als der Außendurchmesser Dₐ des Schafts 13. Bezogen auf die Drehachse 6 weisen die Abtropfkanäle 18, 19 jeweils eine Vielzahl von vollständigen Windungen um die Drehachse 6 auf. Wesentlich ist, dass der Abtropfkanäle 18, 19 mindestens eine vollständige Windung um die Drehachse 6 aufweist.

Gemäß dem gezeigten Ausführungsbeispiel erstrecken sich die Abtropfkanäle 18, 19 jeweils etwa entlang der halben Länge des Schafts 13. Die Abtropfkanäle 18, 19 weisen eine betragsmäßig identische, aber unterschiedlich orientierte Gewindesteigung auf. Das bedeutet, dass bei einer Drehbewegung der Rolle Flüssigkeiten und/oder Feststoffe in den Abtropfkanälen 18, 19 entweder gleichmäßig nach außen, also in Richtung der Halteabschnitte 15 hin, also von dem jeweils benachbarten Abtropfkanal weg, oder bei entsprechendem Wechsel der Drehrichtung von den Halteabschnitten 15 weg, also auf den jeweils benachbarten Abtropfkanal zu gefördert werden. Es ist grundsätzlich auch denkbar, die Neigungsrichtung der schraubenlinienförmigen Orientierung der Abtropfkanäle identisch auszuführen. Es ist auch denkbar, unterschiedliche Steigungen der schraubenlinienförmigen Abtropfkanäle zu wählen.

Insbesondere ist es möglich, in Abhängigkeit des späteren Einsatzzwecks der Rolle 3, also insbesondere in Abhängigkeit einer Drehgeschwindigkeit der Rolle 3 um die Drehachse 6, den Abtropfkanal 18, 19 fördermengenoptimiert anzupassen. Anpassungsparameter sind beispielsweise die Länge des Abtropfkanals, also die Anzahl der Windungen um die Drehachse 6, die Ganghöhe h, der Außendurchmesser Dₐ des Schafts 13 und die Länge der Rolle 3 selbst.

Die beiden Abtropfkanäle 18, 19 sind in einem mittigen Bereich des Schafts 13 durch einen Ableitabschnitt 20 voneinander getrennt. Der Ableitabschnitt 20 dient zum Ableiten der Flüssigkeiten und/oder der Feststoffe von der Rolle 3. Der Ableitabschnitt 20 ist als umlaufende Rechtecknut ausgeführt. Die Nuttiefe des Ableitabschnitts 20 ist größer als die jeweilige Nuttiefe der Abtropfkanäle 18, 19. Die Nutbreite des Ableitabschnitts 20 ist größer als die jeweilige Nutbreite der Abtropfkanäle 18, 19.

Nachfolgend wird die Funktion der Rollen und der Förderanlage näher erläutert. Während des Betriebs der Förderanlage 1 werden die Förderbandabschnitte 5 des Förderbands 2 über die drehbaren Rollen 3 angetrieben. Der Antrieb kann unmittelbar über die Rollen 3 und/oder über ein nicht dargestelltes Antriebselement erfolgen.

Auf die Rollen 3 auftreffende Nässe und/oder Schmutz gelangt in einen oder beide spiralförmig ausgeführten Abtropfkanäle 18, 19 und wird darin gezielt geführt. Ein unkontrolliertes Verteilen der Flüssigkeiten und/oder der Feststoffe ist verhindert. In Abhängigkeit der Drehrichtung um die Drehachse 6 der Rollen 3 werden aufgrund der jeweils schraubenlinienförmigen Ausführung der Abtropfkanäle 18, 19 die Flüssigkeiten und/oder die Feststoffe zu dem Ableitabschnitt 20 hin oder von dem Ableitabschnitt 20 weg gefördert. Insbesondere ist es vorteilhaft, wenn die Flüssigkeiten und/oder die Feststoffe nach außen, also zu den stirnseitigen Enden des Schafts 13 abgeführt werden. Dadurch kann verhindert werden, dass Nässe und/oder Schmutz zu einer Verunreinigung und/oder Beschädigung des Förderbands 2 führt.

In Abhängigkeit der Drehzahl der Rollen 3 ergibt sich eine veränderliche Menge von Flüssigkeiten und/oder Feststoffen in den Abtropfkanälen 18, 19. Bei hoher Drehgeschwindigkeit ist das Volumen Flüssigkeiten und/oder Feststoffen in den Abtropfkanälen 18, 19 vergleichsweise gering. Flüssigkeiten und/oder Feststoffe werden stirnseitig zu den Enden des Schafts 13 gefördert und erstrecken sich beispielsweise entlang der äußeren fünf oder sechs Windungen der Abtropfkanäle 18, 19.

Bei reduzierteren Drehzahlen ist das Volumen von Feststoffen und/oder Flüssigkeiten in den Abtropfkanälen 18, 19 vergleichsweise hoch. Die Flüssigkeiten und/oder die Feststoffe können entlang des Abtropfkanals beispielsweise selbsttätig abtropfen, also infolge der Schwerkraft nach unten abfallen und/oder zu dem Ableitabschnitt 20 hin gefördert werden, um von dort selbsttätig abzutropfen. Das selbsttätige Abtropfen aus dem Ableitabschnitt 20 ist dadurch begünstigt, dass der Ableitabschnitt 20 eine gegenüber den Abtropfkanälen 18, 19 erhöhte Nuttiefe aufweist.

## Patentansprüche

1. Rolle (3) für eine Förderanlage (1) umfassend
a. einen zylindrischen Schaft (13), der um eine Drehachse (6) drehbar ist,
b. mindestens einen Abtropfkanal (18, 19) zum gezielten Führen von Flüssigkeiten und/oder Feststoffen, die auf die Rolle (3) einwirken.

2. Rolle gemäß Anspruch 1, **dadurch gekennzeichnet, dass** der mindestens eine Abtropfkanal (18, 19), insbesondere als nutförmige Vertiefung, an einer äußeren Zylindermantelfläche (17) der Rolle (3) integriert ausgeführt ist.

3. Rolle gemäß einem der vorstehenden Ansprüche, **dadurch gekennzeichnet, dass** der mindestens eine Abtropfkanal (18, 19) schraubenlinienförmig bezüglich der Drehachse (6) ausgeführt ist.

4. Rolle gemäß Anspruch 3, **dadurch gekennzeichnet, dass** der mindestens eine schraubenlinienförmige Abtropfkanal (18, 19) eine Ganghöhe (h) aufweist, die kleiner ist als der Außendurchmesser (Dₐ) des Schafts (13), wobei insbesondere gilt: h ≤ 0,5·Dₐ, insbesondere h ≤ 0,4·Dₐ, insbesondere h ≤ 0,3·Dₐ und insbesondere h ≤ 0,25·Dₐ.

5. Rolle gemäß Anspruch 3 oder 4, **dadurch gekennzeichnet, dass** der mindestens eine schraubenlinienförmige Abtropfkanal (18, 19) mindestens eine vollständige Windung um die Drehachse (6) aufweist, insbesondere mindestens zwei vollständige Windungen um die Drehachse (6), insbesondere mindestens fünf vollständige Windungen um die Drehachse (6) und insbesondere mindestens zehn vollständige Windungen um die Drehachse (6).

6. Rolle gemäß einem der vorstehenden Ansprüche, **gekennzeichnet durch** stirnseitig angeordnete Lagerungseinheiten (7, 11) für eine gelagerte Anordnung der drehbaren Rolle (3) an einer Halterung.

7. Rolle gemäß einem der vorstehenden Ansprüche, **gekennzeichnet durch** einen Ableitabschnitt (20) zum Ableiten der Flüssigkeiten und/oder der Feststoffe von der Rolle (3).

8. Rolle gemäß einem der vorstehenden Ansprüche, **gekennzeichnet durch** zwei Abtropfkanäle (18, 19), die sich insbesondere jeweils von einer Stirnseite der Rolle (3) aus erstrecken.

9. Rolle gemäß einem der vorstehenden Ansprüche, **dadurch gekennzeichnet, dass** der Schaft (13) aus Stahlwerkstoff hergestellt ist.

10. Rolle gemäß einem der vorstehenden Ansprüche, **dadurch gekennzeichnet, dass** der Schaft (13) rohrförmig ausgeführt ist.

11. Förderanlage (1) umfassend
a. mindestens eine Rolle (3) gemäß einem der vorstehenden Ansprüche,
b. ein Förderband (2).

12. Förderanlage gemäß Anspruch 11, **dadurch gekennzeichnet, dass** das Förderband (2) entlang einer Förderrichtung (4) geteilt ausgeführt ist und insbesondere zwei, insbesondere identische, Förderbandabschnitte (5) aufweist.

13. Förderanlage gemäß Anspruch 11 oder 12, **gekennzeichnet durch** mehrere Rollen (3), deren Drehachsen (6) parallel zueinander angeordnet sind.
